Europäisches Patentamt

**European Patent Office**

**Office européen des brevets**

(19)

(11) Publication number: **0 185 469**

**A2**

(12) **EUROPEAN PATENT APPLICATION**

(21) Application number: **85308406.9**

(22) Date of filing: **19.11.85**

(51) Int. Cl.⁴: **B 60 G 21/06**
**B 60 G 17/02**

(30) Priority: **17.12.84 US 682295**

(43) Date of publication of application:
**25.06.86 Bulletin 86/26**

(84) Designated Contracting States:
**FR GB**

(71) Applicant: **GENERAL MOTORS CORPORATION**
**General Motors Building 3044 West Grand Boulevard**
**Detroit Michigan 48202(US)**

(72) Inventor: **Eisenberg, Sidney William**
**16216 Silvercrest**
**Linden Michigan 48451(US)**

(72) Inventor: **Johnson, Gregory Joseph**
**6139 Pebbleshire Circle**
**Grand Blanc Michigan 48507(US)**

(74) Representative: **Breakwell, John Neil Bower et al,**
**GM Patent Section Luton Office (F6) P.O. Box No. 3**
**Kimpton Road**
**Luton Beds. LU2 0SY(GB)**

(54) Hydraulic stabilizing system for vehicle suspension arrangement.

(57) A roll stabilizing system for a vehicle wheel spring suspension arrangement includes piston and cylinder units (32,34) mounted between the chassis and respective suspension control arms (22) at opposite sides of the vehicle to counteract roll of the vehicle sprung mass using cornering manoeuvres. A single-ended piston rod (38) in each cylinder unit defines pressure chambers of unequal cross-sectional area, and adverse affects of such inequality on the suspension system are prevented by a force-compensating hydraulic circuit including additional piston and cylinder combinations (66,68) responsive to the hydraulic pressures prevailing in the suspension control arm hydraulic units.

Fig. 2

# HYDRAULIC STABILIZING SYSTEM
# FOR VEHICLE SUSPENSION ARRANGEMENT

This invention relates to a suspension arrangement for a vehicle as specified in the preamble of claim 1, for example as disclosed in US-A-3 779 535.

More specifically, for the purpose of counteracting roll, pitch or like relative displacements of a vehicle sprung mass from an equilibrium position, as during cornering manoeuvres or when traversing bumpy and wavy roads, the invention is concerned with a hydraulic roll, pitch or like stabilizing system wherein hydraulic piston and cylinder units are applied between the sprung and unsprung masses of the vehicle adjacent respective road wheel axles or suspension arms and have cross-connected pressure chambers which counteract centrifugal, vertical and other forces moving the vehicle sprung mass from such equilibrium position. As proposed, these hydraulic systems are intended to supplant or complement conventional stabilizer torsion bar equipment incorporated in vehicle suspension arrangements.

An example of prior such hydraulic stabilizing systems is disclosed in US-A-3 328 019, wherein a pair of such piston and cylinder units are applied to counteract vehicle body roll during cornering. In this instance, the hydraulic units each comprise a piston rod extending completely through the cylinder to define with its piston head a pair of equal-area hydraulic roll stabilizing chambers cross-connected to exert hydraulic resistance to roll deflection of the vehicle sprung mass. Such a system has the disadvantage of undue complexity in the structure and attachment of the hydraulic units incident to the full-length piston rod and its requirements for additional chamber sealing and added mass, for example.

Another form of such piston and cylinder type hydraulic stabilizing system is disclosed in the said US-A-3 779 535, according to which a so-called single-ended piston arrangement has the piston rod extending to the exterior of the cylinder pressure chambers at only one end thereof, so that unit and structural attachment complexity and mass are reduced.

However, extensive work in incorporating this latter type of single-ended piston system in conventional suspensions has shown that frustrating adverse effects on suspension performance unavoidably accompany the gains accomplished in, for example, roll stability. These unwanted effects include alteration of the normal trim height of the vehicle body over the wheels, as well as upsetting the carefully tuned ride rate and damping properties of the original suspension arrangement.

Further, where a pressurized hydraulic accumulator is included in the stabilizer system to fix the degree of hydraulic resistance in the units to roll deflection in the suspension, similar adverse effects are encountered. The system disclosed in the said US-A-3 779 535, or the similar system disclosed in US-A-3 871 635, are exemplary of included hydraulic accumulators pressurizing the stabilizing units, and in either it is unavoidable that any substantial amount of accumulator pressure will act on the unequal-area cross-connected chambers of the stabilizing units to cause an unwanted lifting of the vehicle body over the axle from the trim height purposely provided in the suspension by the vehicle manufacturer.

The present invention is directed to the elimination of these difficulties, such that a single-ended cross-connected hydraulic unit stabilizing system is thereby made practical for application in any modern motor car.

To this end a vehicle suspension arrangement in accordance with the present invention is characterised by the features specified in the characterising portion of claim 1.

Thus an objective of the invention is to achieve practical utility for single-ended systems, and a further objective is the provision of a hydraulic roll or like stabilizing system incorporating such single-ended units, and further incorporating means which will compensate for the differential area created in the opposing chambers of each such unit by the presence of the single-ended piston rod in such a way that the system will operate to prevent all force in the hydraulic units on the suspension except to counteract the conditions for which thay are specifically employed, for example resistance to roll deflection of the sprung mass over the unsprung mass during cornering and other manoeuvres.

The invention thereby features a hydraulic stabilizing system for vehicle suspension including single-ended hydraulic piston and cylinder units, and apparatus cross-connecting the chambers of such single-ended piston and cylinder units, and further including expansible chamber devices as a selected best mode for accomplishing the compensating function. In an exemplary embodiment of this mode, additional piston and cylinder devices are incorporated each within one of the hydraulic circuits cross-connecting the opposing chambers of the suspension units. Pistons movable within the cylinders of these additional units respond to the pressures created in the cross-connected suspension unit chambers during various vehicle ride and/or cornering conditions in such a way that the unequal areas of the suspension unit chambers are neutralized from exhibiting any unwanted force conditions between the sprung and unsprung masses of the vehicle.

In the drawings:

Figure 1 is a fragmentary front elevational view of a vehicle partially broken away and showing a vehicle suspension arrangement, with hydraulic stabilizing system, in accordance with the present invention, represented partly in diagrammatic fashion;

Figure 2 is a view similar to Figure 1 but illustrating the hydraulic stabilizing system in greater detail and diagrammatically; and

Figure 3 is a perspective schematic representation of an illustrative embodiment of a portion of a system in conformity with the invention, with parts broken away.

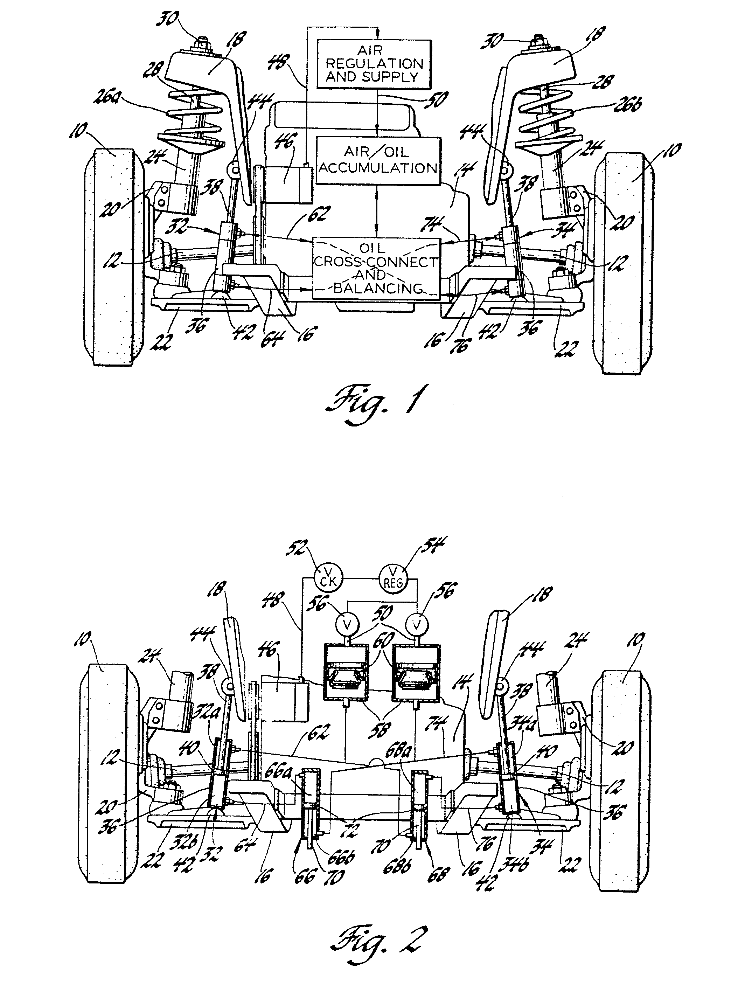

With reference now to Figure 1 of the drawings, there is illustrated the engine, drive and front suspension aggregate for a front-wheel drive type of vehicle of generally well-known character incorporating a pair of front steerable road wheels 10 driven by front half drive shafts 12 extending from an engine, transmission and differential unit indicated generally at 14. Such unit 14 is secured in known manner to a mounting cradle or like structure having frame-like rails 16 at lower margins of a vehicle sheet metal chassis integrated with the vehicle body. In the forward portions of the vehicle, further such chassis sheet metal structure includes strut mounting frame towers 18 which together with the frame rails 16, drive units 14 and remaining parts of the chassis/body constitute the mass of the vehicle to be spring-supported upon the wheels 10, in other words the vehicle sprung mass.

Generally conventional substantially mirror-image front suspension elements at each side of the vehicle include a forged or like wheel carrier (knuckle) 20 accepting the drive shafts 12 and mounting the wheels 10, and a lower transverse control arm 22 pivotally secured at its outer end to the lower end of the knuckle 20 and at its inner end upon one of the rails 16. A suspension strut assembly 24 is fixed at its lower end to the upper end of the knuckle 20 and, as is well known, consititutes a telescopic damper unit the lower portion of which seats a primary coil suspension spring 26a or 26b and the upper portion of which is a piston rod 28 secured by suitable means 30 to a respective frame tower 18. The upper ends of the suspension springs 26a and 26b also seat on such towers 18. Thus, these described suspension elements together with the road wheels 10 constitute the unsprung mass of the front end of the vehicle, enabling resiliently cushioned and hydraulically damped relative motion between the respective masses of the vehicle during various road operating conditions. The springs 26a and 26b together with one or more similar springs at the rear of the sprung mass support the same in an equilibrium or "trim" position when the vehicle is at rest.

Among the various road operating conditions are cornering situations in which, as the vehicle negotiates a curve, the sprung mass tends to lean or roll in one direction under the action of centrifugal force applied thereto, so as (by way of example for one direction of turn) to further compress the coil spring 26a and reduce the load on the coil spring 26b. A hydraulic lower stabilizing system in conformity with the present invention is applied to the vehicle suspension apparatus in order to counteract to a selected degree such roll of the sprung mass.

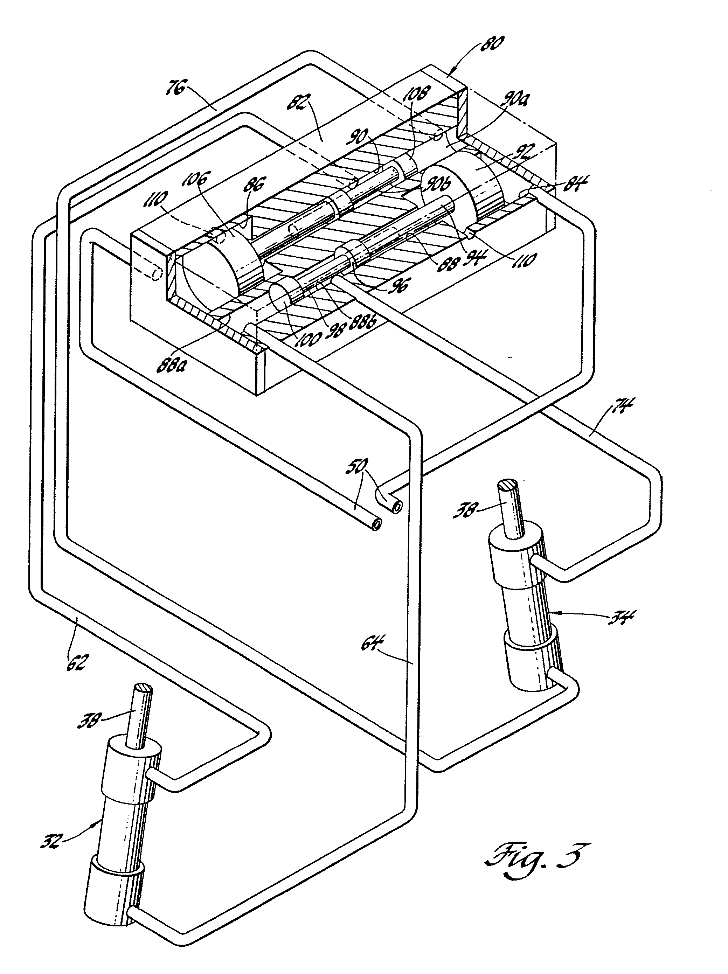

The system is diagrammatically represented in Figure 1, and inlcudes a pair of identical hydraulic piston and cylinder units generally indicated as 32 and 34. As is also seen in Figure 2, each of these units comprises a cylinder portion 36 receiving in suitably sealed manner a piston rod 38 carrying a piston head 40 sealedly fitted to the cylinder interior to define opposite upper and lower uncommunicated pressure chambers. The lower end of each cylinder portion 36 is pivotally secured at 42 to a respective control arm 22, and the upper distal end of the piston rod 38 is likewise pivotally secured to the respective frame tower 18 as at 44. Inasmuch as the lower (inner) distal end of the piston rod 38 carrying the piston head 40 resides in only one of the two hydraulic chambers defined in each unit 32 or 34, the hydraulic pressure area of the cross-section through such units is of unequal amount in the two chambers in view of the differential area due to the presence of the piston rod 38.

Roll or lean of the vehicle sprung mass is counteracted by hydraulically cross-connecting, for example, the lower oil-filled chamber of the unit 32 to the upper oil-filled chamber of the unit 34 via a pipe. Hence, during vehicle cornering producing centrifugal force on the sprung mass tending to compress or further load the coil spring 26a, a force is applied which contracts the unit 32 to move its piston rod 38 downwardly. Concurrently, the spring 26b is unloaded, and the piston rod 38 of the unit 34 tends to be moved upwardly. Such contraction of the lower chamber of the unit 32 concurrently with contraction of the upper chamber of the unit 34 is resisted by the hydraulic pressure created therewithin.

Although prior-art systems as enumerated hereinabove appeared effective for the stated purpose of roll stabilization, attempts to employ them in practice have proved unsuccessful. When single-ended units such as have been described herein are applied to conventional suspension apparatus of a modern vehicle, the normal suspension characteristics are altered in an undesirable way. For example, it is found that when the pressurized air/oil accumulators of such prior systems are applied to such cross-connected units to select an effective level of resistance to roll of the sprung mass, any application of accumulator pressure to the cross-connected circuits undesirably lifts the sprung mass above its normal trim height over the wheels 10. That is, the units 32 and 34 become force-applying devices assisting the coil springs 26a and 26b in supporting the sprung mass. Further, it is found that during normal road operation with such a system, the movements of road wheels 10 from bumps and the like tend to have the same effect of lifting the vehicle sprung mass above normal trim height.

It has now been appreciated that these undesirable effects must be due to the unequal cross-sectional areas of the upper and lower chambers of each unit such as 32 and 34, occasioned by the presence of the piston rod 38 in only one of each pair of such chambers. A hydraulic roll stabilizing system effective to cure those effects is represented diagrammatically in Figure 1. Since it is expected that the vehicle operator will not only desire to have these defects eliminated but further be able to select the degree of roll resistance available from the system, an engine-driven air pump 46 is connected by a line 48 to air regulation and supply means, which may be connected by a line 50 to conventional air/oil accumulators. As is seen in Figure 2, the air regulation and supply means may comprise a check valve 52 connected in series with an operator-adjustable regulator valve 54 of known construction. The line 50 may be connected in parallel circuits from a pair of solenoid or like-operated on/off valves 56 also operable at the will of the vehicle operator to either supply the accumulators with the regulated pressure or shut them off from it. Specifically, each accumulator may comprise a device 58 of known character generally employing a flexible wall 60 or like piston-like apparatus separating a body of compressed air in an upper chamber from a lower, oil-filled or like hydraulic chamber.

Each accumulator 58 has its lower oil-filled chamber included in a pressure circuit defined by cross-connected chambers of the units 32 and 34, in addition to which a conduit such as 62 cross-connects the upper chamber 32a of the unit 32 and the lower chamber 34b of the unit 34, and a conduit 64 interconnects the lower chamber 32b of the unit 32 and the upper chamber 34a of the unit 34.

To compensate for the unequal cross-sectional areas of each interconnected pair of these suspension unit chambers, balance means are provided in the form of additional, identical piston and cylinder units 66 and 68 included in the respective cross-connected pressure circuits. These units have no force bearing function in the vehicle suspension structure but may simply have their cylinder portions suitably mounted on the vehicle chassis and each carry therewithin a single-ended piston rod 70 identical to one of the piston rods 38. Such piston rods 70 are each sealed to their cylinder for reciprocation therewithin as required during system operation of piston heads 72 sealedly fitted to their cylinders. Thus, the unit 66 has a first chamber 66a having a cross-sectional area matched to that of the lower chamber 32b of the unit 32, and a lower chamber 66b matched in cross-sectional area to the upper chamber 34a of the unit 34. A like relationship exists in the unit 68 to the upper and lower chambers respectively of the units 32 and 34. Additional conduits 74 and 76 complete the cross-connecting pressure circuits from the units 66 and 68 to the units 32 and 34.

Therefore, taking the example of a cornering manoeuvre rolling the sprung mass of the vehicle in a manner to compress the coil spring 26a, the resulting downward movement tendency of the piston rod 38 within the unit 32 tends to contract its lower chamber 32b to develop pressure in the chamber 66a against the piston head 72 in the unit 66 in a downward direction. Such roll motion of the sprung mass also carries the piston rod 38 upwardly within the unit 34 and contracts the upper chamber 34a thereof to cause pressurization of the lower chamber 66b of the piston-and-cylinder compensating unit 66. All such hydraulic displacement within the units 32 and 34 is resisted by the air pressure within the accumulator 58 attached to the conduit 74. Any oil expelled from the chambers of the two units under the centrifugal force of the sprung mass, and accordingly further displaced from the chambers 66b of the unit 66, must overcome the pressure in such accumulator selected by the driver. Roll control or stabilization resistance is thereby obtained.

Thus the effect of including the units 66 and 68 in the cross-connecting circuits between the units 32 and 34 is that variation by the driver of the selected regulated pressure applied to the accumulators 58 has no effect upon the vehicle suspension arrangement. With the vehicle at rest, any pressure created in the conduits 62 and 74 by the accumulators 58 is transmitted to the upper chambers of the units 32 and 34 and, as exerted on the piston heads and respective cylinder end wall, creates a given separating force therebetween. The same pressure applied through the conduits 62 and 74 to the lower chambers of the units 66 and 68 results in an identical force in the opposite direction in the lower chambers of the units 32 and 34 even though pressure is applied to unequal areas therein. This is, of course, the result of unequal areas in the opposed chambers of the units 66 and 68 being matched to reflect the area inequality in the units 32 and 34. The piston heads 72 each exhibit a force which is the product of such operator-selected air pressure times the area of either lower chamber 66b or 68b, resulting in a pressure in the other chambers 66a and 68a which is the dividend of such force divided by the different area of the other chamber. The total volume of each unit 66 or 68 should equal that of the unit 32 or 34 to avoid hydraulic interference to other suspension operation. However, by properly sizing the area of the piston rod 70 and head 72 to be proportional to that of the piston rod 38 and head 40, the unequal area of the chamber of the units 32 and 34 is fully compensated.

Experience has shown that the same prior difficulties attributed to the unequal area of the single-ended units 32 and 34 when varying the pressure of the accumulators 58 also arise during normal road operation of the vehicle over bumps. Such road operation would tend to pump up the cross-connected circuits, just as would adjustment of the regulator valve 54 upwardly, to hold the vehicle sprung mass at a higher level than designed. The system of this invention embodying the units 66 and 68 avoids these difficulties as well.

Figure 3 illustrates a specific structural embodiment of a portion of the system of Figure 2, other portions carrying like reference numerals. The compensating units previously described, together with the two air/oil accumulator units, are integrated into a single assembly, such assembly being generally designated as 80, and thereby somewhat simplify the plumbing in the cross-connecting circuits for the units 32 and 34. The assembly 80 comprises a housing 82 including a pair of identical larger-diameter bores 84 and 86 each merging with a smaller-diameter coaxially aligned bore 88 and 90 respectively. A reciprocable accumulator piston member 92 sealedly fitted in the reduced-diameter guide rod portion 94 received in the bore 88 and including a sealing land 96 reciprocable therein. The guide rod portion 94 is also bored at its distal end, as indicated in broken lines, to slidably receive the piston rod 98 of a compensating piston head 100. The piston head 100 and the piston rod 98 are sized diametrically to match proportionately the piston head and the piston rod of the units 32 or 34, and the chambers 88a and 88b equal in total volume the total volume of either such unit. Thus, such piston head 100 is constructed within the cross-connecting circuit between the units 32 and 34, in a manner as indicated in Figure 2, by communicating the conduit 64 to the compensating chamber 88a, while the opposite compensating chamber 88b containing the piston rod 98 of the compensating unit is communicated by the conduit 74 to the upper chamber of the unit 34.

The construction just described for the element of the piston 92 of the accumulator unit and piston head 100 of the compensating unit is identically applicable to a piston 106 in the bore 86 constituting an accumulator unit, as well as a piston 108 in the bore 90 constituting a compensating unit. Likewise, in the manner generally represented in Figure 2, the conduit 76 connects the larger-area chamber 90a opposite the piston 108 to the lower chamber of the unit 34, and the conduit 62 completes the cross-connection from the opposite smaller chamber 90b of the piston 108 to the upper chamber of the unit 32.

The pistons 92 and 106 of the accumulator units are selectively pressurized as previously described through conduits 50 from respective on/off valves 56, not shown in Figure 3. Displacement of these pistons under selected air pressure moves the sealing lands such as 96 in a direction to increase or decrease the volume in the described cross-connect circuits and hence the pressure therein. Thus for example the sealing land 96, when displaced leftwardly under selected higher air pressure, pressurizes the smaller chamber 88b of the piston 100, and the conduits 74 and 64 communicate such pressure to the respective chambers of the units 32 and 34.

Like action occurs from the simultaneous pressurization of the piston 106. Bleed holes 110 are provided at the underside of the pistons 92 and 106 to drain any oil which finds its way into the accumulator chambers.

Although the foregoing describes only one mode for accomplishing the invention, alternative means may readily be employed to accomplish the compensating function of this invention, within the scope of the claims. For example, similar expansible chamber devices other than matched piston and cylinder units might be used. In all instances, however, it is contemplated that the single-ended piston of the suspension units have means such as described for eliminating the effects of the unequal area of its chambers when cross-connected in the described manner to avoid the described effects.

The principles of the invention are applicable irrespective of whether the application is a roll stabilization system, a pitch stabilization system, or a combination thereof.

Claims:

1. A suspension arrangement for a vehicle having an unsprung mass with a plurality of road wheels (10) and also having a sprung mass, in which a hydraulic stabilizing system includes a pair of like piston and cylinder units (32,34) each applied between the sprung and unsprung vehicle masses adjacent a respective road wheel (10) and comprising a piston rod (38) attached to the same selected one of the said masses and at its inner distal end carrying a piston head (40) that is relatively movable within its cylinder and partitions such unit (32,34) into opposite chambers (32a,32b,34a,34b) of different cross-sectional area, and means (62,64,74,76) cross-connecting each chamber (32a,32b, 34a,34b) of the other said unit (32,34), characterised in that the cross-connecting means (62,64,74,76) includes expansible chamber means (66, 68) operative to compensate for the differential area of the said chambers (32a,32b,34a,34b) and prevent force in the said units (32,34) between the sprung and unsprung vehicle masses except in the presence of forces therebetween tending to move the piston heads (40) of the said units (32,34) in opposite directions within their cylinders.

2. A suspension arrangement according to claim 1, characterised in that variable-pressure liquid supply means (46 to 60) is provided for pressurizing the chambers (32a,32b,34a,34b) of the said units (32,34) to a selected value, and that the cross-connecting means (62,64,74,76) comprises a pair of compensating cylinders (66 and 68) each having a piston (72) defining opposite chambers (66a,66b,68a, 68b) with cross-sectional areas proportional to respective chambers (32a,32b,34a,34b) of the said units (32,34) and connected thereto.

0185469

**Fig. 1**

AIR
REGULATION
AND SUPPLY

AIR/OIL
ACCUMULATION

OIL
CROSS-CONNECT
AND
BALANCING

**Fig. 2**

Fig. 3